# EUROPEAN PATENT SPECIFICATION

(11) **EP 4 383 440 B1**
(45) Date of publication and mention of the grant of the patent: **25.02.2026**
(21) Application number: 22211761.6
(22) Date of filing: 06.12.2022
(51) Int. Cl.: H01M 50/502, H01M 50/505, H01R 11/28, H01R 13/631

(54) **POWER CONNECTOR FOR CONNECTING A BUSBAR TO AN ELECTRICAL BATTERY MODULE AND BATTERY CONNECTION ASSEMBLY**
STROMANSCHLUSS ZUM ANSCHLIESSEN EINER STROMSCHIENE AN EIN ELEKTRISCHES BATTERIEMODUL SOWIE BATTERIEANSCHLUSSANORDNUNG
CONNECTEUR DE PUISSANCE POUR CONNECTER UNE BARRE OMNIBUS À UN MODULE DE BATTERIE ÉLECTRIQUE ET ENSEMBLE DE CONNEXION DE BATTERIE

(43) Date of publication of application: 12.06.2024
(73) Proprietor: Aptiv Technologies AG, 8200 Schaffhausen (CH)
(72) Inventor: GUILLANTON, Mélanie, 28230 EPERNON (FR); MORIN, Laurent, 78120 RAMBOUILLET (FR); BELLIARD, Frédéric, 28170 TREMBLAY LES VILLAGES (FR); BEAUR, Benoît, 28000 CHARTRES (FR)
(74) Representative: INNOV-GROUP

(56) References cited:
- WO-A1-2013/178433
- US-A1- 2015 171 401
- US-B1- 8 628 335

## Description

### Technical Field

The disclosure below relates to the field of battery connection technology. For example, this disclosure relates to connection devices making it possible to interconnect battery cells or modules and notably battery cells or modules for electric or rechargeable hybrid motor vehicles. This disclosure relates to connection devices making it possible to connect such battery cells or modules to an electrical power circuit.

### Prior Art

At present, batteries for electric or rechargeable hybrid motor vehicles are composed of packets of cells or modules. For the sake of simplicity and conciseness, in this document, the term "module" is used to refer either to one battery cell or to several cells packed together.

Generally speaking, it is common practice to use busbars in power connection circuits (see, for example, the patent document published under no. WO2013178433A1). More specifically, in batteries, modules are commonly connected by means of busbars fastened onto the batteries using a screw and nut system. In order to increase the autonomy of the vehicles, one solution consists of increasing the number of interconnected modules. This therefore results in an increase in the number of nuts to be screwed and the consequences of this notably include an increase in the assembly time and the risk of having a busbar that is poorly screwed and therefore poorly connected (the number of screw turns, the screwing torques, etc. are not easily controllable parameters). Moreover, the current technology does not provide much flexibility in terms of tolerances. Unwanted electrical contacts can also result from difficulties to position the busbar terminals on the battery terminals. Such a drawback may cause security issues for operators. Moreover, given the high cost of the batteries in this type of vehicle, the quality problems which can result in having to change the battery must be avoided.
It is therefore desired to replace screwed solutions by plug solutions. However, it is also desired to improve the current plug solutions, in particular with regard to the positioning of plug connectors and in terms of security improvement.

### Summary of the invention

For this purpose, it is proposed a power connector for connecting a busbar to an electrical battery module, according to claim 1.
Thanks to this power connector, positioning the busbar terminals on the battery terminals and establishing electrical contact between them are separate operations. Indeed, first an operator (or a robot) can position the power connector while the cap remains locked in the delivery position in which the connection portion is retracted further into the guiding portion than in the connection position. This helps to prevent an unwanted electrical contact with a battery terminal. For establishing an electrical contact between the busbar and battery terminals, an operator has to push onto the cap in the mating direction.

The disclosed power connector possibly comprises one and/or the other of the features listed in Claims 2 and 3, each considered independently of each other or in combination with one or more others.

According to another aspect, it is disclosed a busbar connection assembly according to claim 4, and this busbar connection assembly possibly comprises one and/or the other of the features listed in Claims 5 to 8, each considered independently of each other or in combination with one or more others.

According to another aspect, it is disclosed a battery connection assembly according to claim 9, and this battery connection assembly possibly comprises one and/or the other of the features listed in Claims 9 to 11, each considered independently of each other or in combination with one or more others.

According to another aspect, it is disclosed a method of connecting two electrical battery modules, according to claim 12.

### Brief description of the drawings

Other features, purposes and advantages of the disclosure will become apparent on reading the following detailed description given with reference to the appended drawings and by way of non-limiting examples and in which:
Figure 1 is a schematic and exploded representation in perspective of an example embodiment of a battery connection assembly;
Figure 2 is a schematic cross-section of a power connector of the battery connection assembly shown in Figure 1, this power connector being represented with the cap in delivery position;
Figure 3 is a schematic cross-section of the power connector shown in Figure 2, this power connector being inserted in the header cavity of a header connector, the power connector and the header connector being in an intermediate position in which the cap is still in the delivery position;
Figure 4 is similar to Figure 3, the cap being represented in the connection position;
Figure 5 is a schematic representation in perspective of a busbar connection assembly for the battery connection assembly shown in Figure 1;
Figure 6 is a schematic representation in perspective of the battery connection assembly shown in Figure 1;
Figure 7 is a schematic side view of the busbar to be mounted in the battery connection assembly of figure 1;
Figure 8 is a schematic side view of another example of busbar shape.

### Detailed description

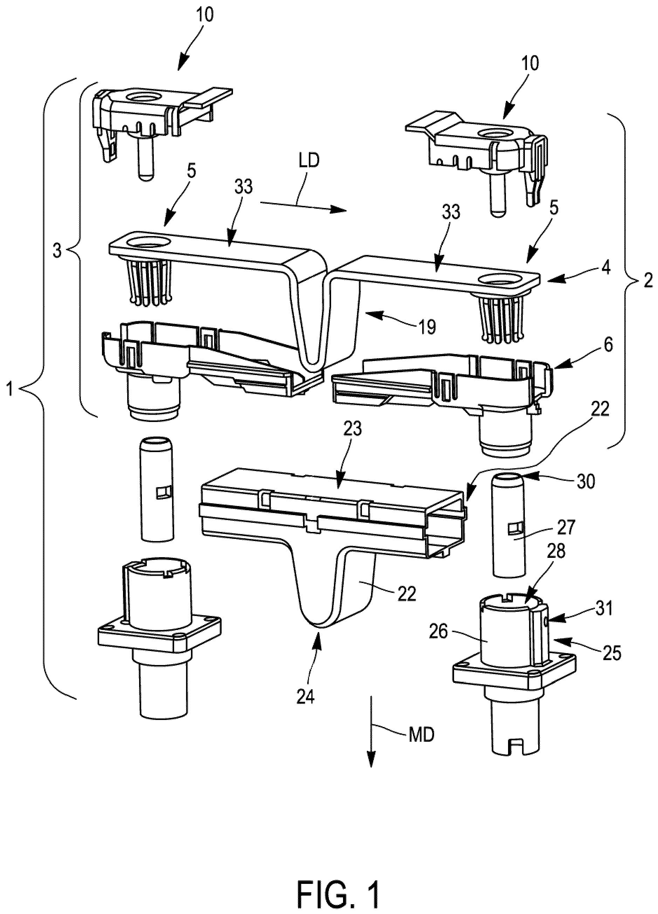

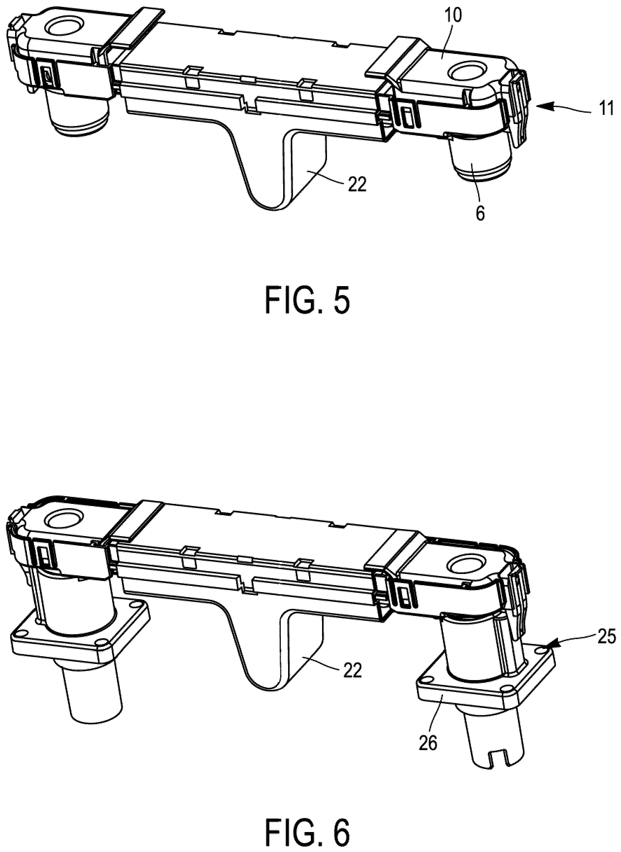

An example of an embodiment of a battery connection assembly is shown in Figure 1. According to this example, the battery connection assembly 1 comprises a busbar connection assembly 2 (see also Figure 5) which connects through a respective header connector 25, two poles, positive and negative respectively, of two battery modules (not shown).

The busbar connection assembly 2 comprises two power connectors 3, each one located at a respective busbar end 5 of a busbar 4. It will be noted that, although the present disclosure relates to a busbar connection assembly 2 comprising two power connectors 3, the design of a single power connector 3 for connecting a battery module to any power circuit, through a busbar, can be derivable from this description. It is sufficient to replace at least one of the power connectors 3 with a suitable connector for connection to that circuit.

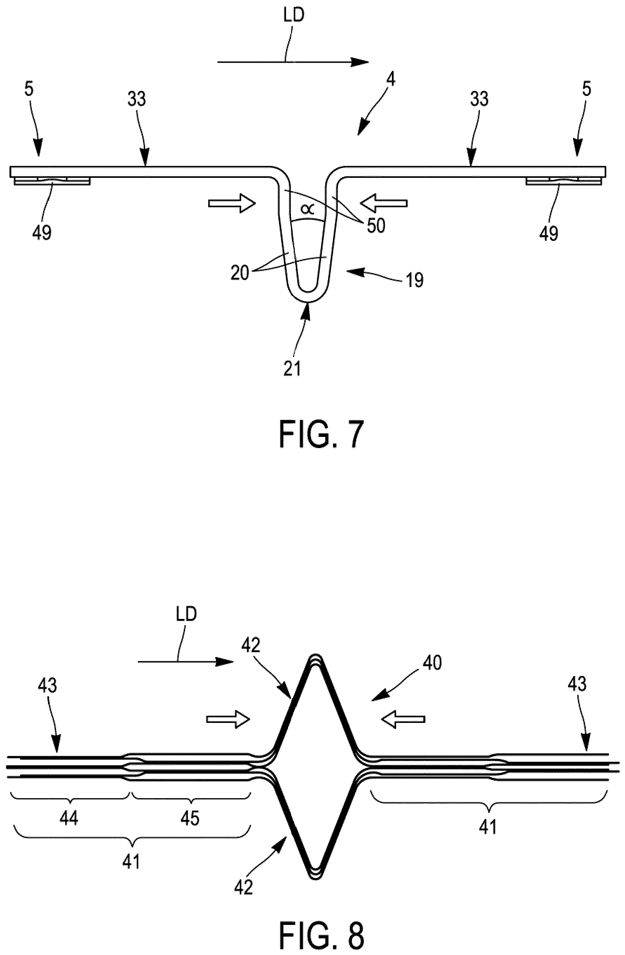

The busbar 4 is for example made of plurality of conductive layers (e.g. of copper or a copper alloy). In other words, the busbar 4 has a multi-layered structure (e.g. with 6 layers). The layers are maintained together only at each busbar end 5 by a kind of rivet 49 (see Figure 7), to which a connector terminal 7 is mechanically fastened and electrically connected. The busbar 4 extends essentially longitudinally along a longitudinal direction LD. More particularly, as shown in Figure 1 and 7, the busbar 4 has two straight portions 33 extending longitudinally along the longitudinal direction LD and in between of which is located a V-shaped portion 19. The V-shaped portion 19 comprises two branches 20 linked at the vertex 21 of the V-shaped portion 19. The V-shaped portion 19 is configured so as to allow the two busbar ends 5 (i.e. the two straight portions 33) to be displaced relative to each other at least parallel to the longitudinal direction LD of the busbar 4 (see the arrows in Figure 7). For this purpose, the V-shaped portion 19 comprises two thrust portions 50 at right angle to the straight portions 33, and the angle α between these branches 20 is equal or less than 30 degrees, for example. These features prevent the busbar 4 from bending upwards when a compression force is applied which tends to bring the connection terminals 7 towards each other. Each layer is 0,3mm thick. To achieve an appropriate flexibility, the total height of the V-shape is, for example, 40mm.

The V-shaped portion 19 is housed in a cover 22 (see Figures 1, 5 and 6). The cover 22 provides a protection to at least the IP2X level. The cover 22 has a tooth shape (triangle shape) extending essentially in a mating direction MD, from a base 23 to an apex 24. Such a configuration provides the advantage that the cover 22 is located in a volume comprised between the two power connectors 3 (See Figures 5 and 6). In other words, this configuration is rather compact and does not add more height (i.e. in the mating direction MD) to the busbar connection assembly 2.

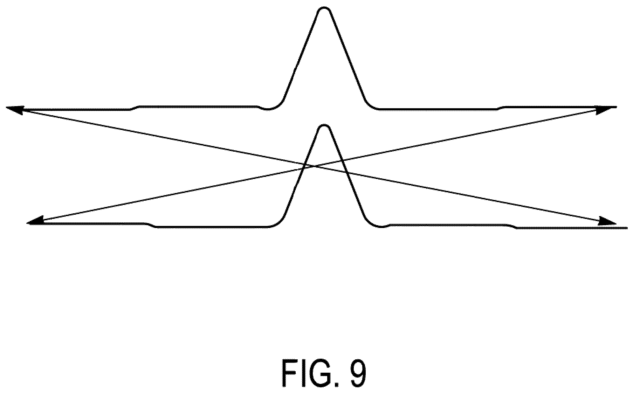

Figure 8 shows a busbar 40 with an alternative shape. The busbar 40 is for example made of plurality of conductive layers (e.g. of copper or a copper alloy). In other words, the busbar 40 has a multi-layered structure. Contrarily, to the layers of the example illustrated in Figure 7, in this embodiment, the layers are all the same. Indeed, as illustrated in Figure 9, the layers are two adjacent layers are placed head to tail. This provides an economic advantage in terms of the manufacture of the layers. The layers are maintained together only at each busbar end 43 with a kind of rivet (not shown) to which a connector terminal 7 (not shown in Figure 8) is mechanically fastened and electrically connected. Alternatively, the layers are maintained together by the connector terminal 7 itself. The busbar 40 extends essentially longitudinally along a longitudinal direction LD. However, as shown in Figure 8, the busbar 40 has two straight portions 41 extending essentially longitudinally along the longitudinal direction LD and two opposite V-shaped portions 42. The two opposite V-shaped portions 42 are located between the two straight portions 41. Each one of the two straight portions 41 has a fixation portion 44 and an intermediate portion 51. Each fixation portion 44 serves to fix a respective connector terminal 7. The illustrated configuration is symmetrical and prevents prevent the busbar 4 from bending upwards when a compression force is applied which tends to bring the connection terminals 7 towards each other.

The busbar 40 illustrated in Figure 8 has the advantage of having a good flexible behaviour when the busbar 40 is compressed in the longitudinal direction LD.

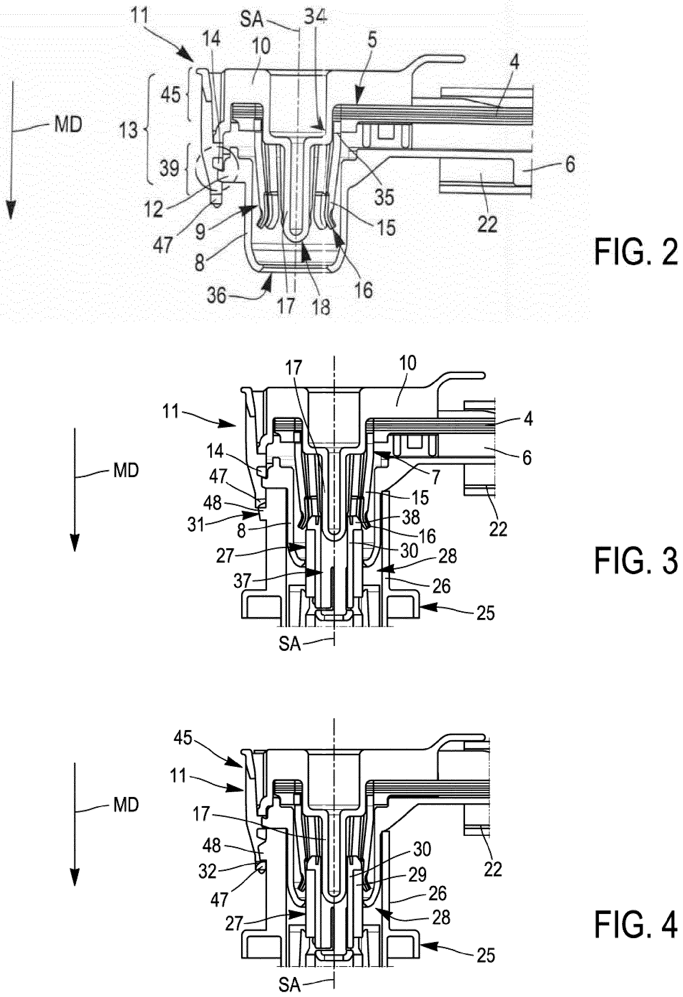

As shown in particular in Figure 2, each power connector 3 comprises an electrically insulating connector housing 6, an electrically insulating cap 10 and a connector terminal 7. For example, the connector housing 6 and the electrically insulating cap 10 are made of moulded plastic. Each connector housing 6 accommodates a connector terminal 7 electrically connected to a respective busbar end 5.

In the illustrated example, each connector terminal 7 is a female terminal. Each connector terminal 7 comprises a crown or sleeve 35 fastened to a busbar end 5. A plurality of contact blades 15 extends longitudinally essentially in the mating direction MD and is arranged symmetrically around a circular symmetry axis SA which is parallel to the mating direction MD. Each contact blade 15 extends longitudinally from the crown 35, with which it is integral, to a free end 16.

Each connector housing 6 comprises a guiding portion 8 in which a connection portion 9 of the connector terminal 7 is housed. More particularly, each free end 16 of a contact blade 15 is located in the corresponding guiding portion 8.

Each cap 10 at least partially closes the connector housing 6. Each cap 10 is configured so as to prevent the connector terminal 7 and the busbar end 5 housed in the connector housing 6 from being touched by an operator (in other words, the connector housing 6 and the cap 10 provide a protection to at least the IP2X level).

Each one of the connector terminals 7 and busbar ends 5 are mechanically and rigidly attached into a respective cap 10. More precisely, each cap 10 has a fastening peg 34 that is forced into a crown 35 of a connector terminal 7 (however several other means can be envisioned for fastening the cap 10 onto a connector terminal 7 and/or the busbar 4). The cap 10, the connector terminal 7 and the busbar end 5 are movable together relative to the connector housing 6 between at least a delivery position (Figures 2 and 5) and a connection position (Figures 4 and 6).

In the delivery position (Figure 2), the connection portion 9 is retracted further into the guiding portion 8 than in the connection position (Figure 4). In other words, in the delivery position, the free ends 16 of the contact blades 15 are away from the mating face 36 of the guiding portion 8 (this mating face 36 corresponds to the opening through which the terminal of a counter-connector can be inserted).

Each cap 10 comprises cap locking means 11. The cap locking means 11 comprises a lever 13 hinged on the cap 10. The lever 13 comprises a locking portion 39 and an actuating portion 45, respectively located on each side of a hinge. The locking portion 39 comprises a first stop 14 engaging a protrusion 12 integral with the connector housing 6, for holding the cap 10 and the connector housing 6 in the delivery position.

The cap locking means 11 is actuatable between a locked position and an unlocked position. More particularly, the CPA locking means rotates/tilts about the hinge between the locked position and the unlocked position. In its locked position, the locking means 11 engages the protrusion 12 to hold the cap 10 and the connector housing 6 together in the delivery position. In its unlocked position, the locking means 11 releases the cap 10 from the protrusion 12, so as to allow the cap 10 to be pushed into the connection position, by an operator (or a robot).

Each cap 10 comprised a finger 17 extending essentially parallel to the mating direction MD, from the fastening peg 34 to a tip 18. The finger 17 is integral with the cap 10. In the illustrated example, the finger 17 has a cylindrical shape. The connection portion 9 of the connector terminal 7 is retracted behind the tip 18. Thereby, the finger 17 and the guiding portion 8 provides an IP2X protection.

As illustrated in Figures 1, 3, 4 and 6, a header connector 25 comprises a header housing 26. A header terminal 27 is housed in each header housing 26. Each header housing 26 is made of an electrically insulating material (for example, it is made of moulded plastic). Each header housing 26 has a header cavity 28 within which a connection portion 29 of the header terminal 27 protrudes. The header terminal 27 is configured so as to be mated with the connector terminal 7.

In the illustrated example, the header terminal 27 is a male terminal. The header terminal 27 has essentially a cylindrical shape with a cylindrical axis SA parallel to the mating direction MD. The header terminal 27 has a recess 37 extending longitudinally parallel to the mating direction MD. The header terminal 27 is made of conductive material such as copper or a copper alloy for example. The header terminal 27 comprises an insulating end piece 30. The insulating end piece 30 is partially inserted in the recess 37. The insulating end piece 30 has a ring 38 which covers the circular edge of the free end of the header terminal 27, thereby the header housing 26 and the insulating end piece 30 provide an IP2X protection. The insulating end piece 30 forms a hollow cylinder configured to receive at least a portion of the finger 17.

In order to connect two electrical battery modules of electrical or hybrid vehicle, the following method is implemented by an operator (alternatively by a robot).

During a pre-positioning step the two guiding portions 8 of a busbar connection assembly 2 are each respectively aligned with a header connector 25 of an electrical battery module and each guiding portion 8 is positioned opposite a respective header cavity 28.

During a plugging step, each guiding portion 8 is inserted in a respective header cavity 28 up to an intermediate position in which the cap locking means 11 of each power connector 3 interacts with respective unlocking means 31 comprised on each header connector 25. In this intermediate position, the cap locking means 11 are still in the locked position (figure 3). At this stage, the free end 16 of the contact blades 15 rests on the insulating end piece 30 (i.e. there is no risk of electrical contact between the connector terminals 7 and the header terminals 27).

During a connecting step, the cap 10 is pushed in the mating direction MD so that the cap locking means 11 is released by the unlocking means 31 and can be moved up to a configuration wherein the cap 10 is in its connection position. For example, the unlocking means 31 comprises a tooth 48 with an inclined surface and a second stop 47 integral with the lever 13. While the cap 10 is pushed in the mating direction MD, the second stop 47 slides on the inclined surface (in other words the incline surface is part of the unlocking means 31). Thereby, the lever 13 is tilted and the first stop 14 is released from the protrusion 12. When the cap 10 is further pushed in the mating MD, the cap locking means 11 locks onto header locking means 32 integral with the header connector 25. More particularly, for example, the second stop 47 is blocked by a stop surface behind the tooth 48 (in other words the stop surface forms header locking means 32). In this configuration, the guiding portion 8 is inserted in the header cavity 28 in a final position and the cap 10 is in its connection position.

In the illustrated example, the cap locking means 11 and the locking means used for locking the power connector 3 and the header connector 25 together in the final position, involves the same lever 13. However, alternatively, these means can be distinct.

In order to un-mate the power connector 3 and the header connector 25, an operator pushes on the actuating portion 45 of the lever 13, and pull the cap 10 in a direction opposite to the mating direction MD.

As one can understand, positioning the connector terminals 7 (i.e. busbar terminals) on the header terminals 27 (i.e battery terminals) and establishing an electrical contact between them are distinct operations. During the positioning (i.e. prepositioning and intermediate plugging steps), the connection portion 9 of the connector terminals 7 cannot electrically connect the corresponding header terminal 27. Indeed, the cap 10 (onto which the connector terminal 7 is mounted) is retained in the delivery position by the cap locking means 11. This is only when the power connector 3 is well positioned onto the header connector 25, that the cap locking means 11 can be released so as to allow the cap 10 to be pushed to its connection position in which the connector terminal 7 connect the header terminal 27.

## Claims

1. A power connector (3) for connecting a busbar (4) to an electrical battery module, the power connector (3) comprising,
an electrically conductive busbar (4) having a busbar end (5) ,
an electrically insulating connector housing (6) accommodating a connector terminal (7) electrically connected to the busbar end (5), the connector housing (6) having a guiding portion (8) in which a connection portion (9) of the connector terminal (7) is housed,
an electrically insulating cap (10) at least partially closing the connector housing (6) and preventing the connector terminal (7) and the busbar end (5) from being touched by an operator finger,
**characterized in that** the connector terminal (7) and busbar end (5) are mechanically and rigidly attached into the cap (10), **in that** the cap (10), the connector terminal (7) and the busbar end (5) are movable together relative to the connector housing (6) between at least a delivery position and a connection position, in the delivery position the connection portion (9) being retracted further into the guiding portion (8) than in the connection position, and **in that** the cap (10) comprises cap locking means (11), the cap locking means (11) being actuatable between a locked position in which it holds the cap (10) and the connector housing (6) in the delivery position and an unlocked position wherein the cap (10) and the connector housing (6) are released so as to allow the cap (10) to be pushed into the connection position.

2. The power connector (3) according to claim 1, wherein the connector housing (6) comprises a protrusion (12) and the cap locking means (11) comprises a lever (13) hinged on the cap (10), the lever (13) comprising a first stop (14) engaging the protrusion (12), for holding the cap (10) and the connector housing (6) in the delivery position.

3. The power connector (3) according to claim 1 or 2, wherein the connector terminal (7) is a female terminal having contact blades (15) extending longitudinally essentially in the mating direction (MD) and arranged symmetrically around a symmetry axis (SA) which is parallel to the mating direction (MD), each contact blade (15) having a free end (16), each free end (16) being located inside the guiding portion (8), and wherein the cap (10) comprises a finger (17) extending essentially parallel to the symmetry axis (SA), the cap (10) and the finger (17) being integral, the finger (17) having a tip (18) positioned within the guiding portion (8) and further in the mating direction (MD) than each free end (16) of contact blade (15).

4. A busbar connection assembly (2) comprising a power connector (3) according to any one of claims 1 to 3, comprising one busbar (4), two connector housings (6) and two caps (10), wherein the busbar (4) extends in a longitudinal direction (LD) between two busbar ends (5), each busbar end (5) being mechanically and electrically connected to a connector terminal (7) housed in the guiding portion (8) of one of the two connector housings (6).

5. The busbar connection assembly (2) according to claim 4, wherein the busbar (4) is made of a plurality of conductive layers.

6. The busbar connection assembly (2) according to claim 4 or 5, wherein the busbar (4) has a V-shaped portion (19) allowing the two busbar ends (5) to be displaced relative to each other at least in the longitudinal direction (LD) of the busbar (4).

7. The busbar connection assembly (2) according to claim 6, wherein the V-shaped portion (19) comprises two branches (20) linked at the vertex (21) of the V-shaped portion (19), the angle (α) between these branches (20) being equal or less than 30 degrees.

8. The busbar connection assembly (2) according to claim 6 or 7, wherein the V-shaped portion (19) is housed in a cover (22), the cover (22) forming a tooth extending from a base (23) to an apex (24), essentially in the mating direction (MD).

9. A battery connection assembly (1) comprising the power connector (3) of any of claims 1 to 3, a header connector (25), the power connector (3) being configured to mate the header connector (25) in a mating direction (MD), the header connector (25) being mounted on an electrical battery module and comprising a header housing (26) in which a header terminal (27) is housed, the header housing (26) having a header cavity (28) within which a connection portion (29) of the header terminal (27) protrudes, the header terminal (27) being configured so as to be mated with the connector terminal (7),
wherein the guiding portion (8) is configured so as to be inserted in the header cavity (28) in a final position, and the cap locking means (11) is configured to be unlocked by the header connector (25) when the guiding portion (8) is inserted in the header cavity (28) towards the final position, so as to release the connector housing (6) and the connector cap (10) from the delivery position and so as to allow the cap (10) to be pushed in the mating direction (MD) up to the connection position.

10. The battery connection assembly (1) according to claim 9, wherein the cap (10) comprises a finger (17) extending essentially parallel to the mating direction (MD) and the header terminal has a recess extending longitudinally parallel to the mating direction (MD) and configured to receive at least a portion of the finger (17).

11. The battery connection assembly (1) according to claim 9 or 10, wherein the header terminal (27) is a male terminal and the connector terminal (7) is a female terminal, wherein the header terminal (27) comprises an insulating end piece (30) and the connector terminal (7) comprises contact blades (15) extending longitudinally essentially in the mating direction (MD) and symmetrically arranged around a symmetry axis (SA) which is parallel to the mating direction (MD), each contact blade (15) having a free end (16), and wherein at least one free end (16) of contact blade (15) rests on the insulating end piece (30) in a configuration in which the power connector (3) and the header connector (25) are in an intermediate position in which the guiding portion (8) is inserted in the header cavity (28) and the cap locking means (11) are still in the locked position.

12. A method of connecting two electrical battery modules of electrical or hybrid vehicle, the method comprising
- a pre-positioning step comprising the provision of two electrical battery modules and a busbar connection assembly (2) according to any one of claims 4 to 8, each electrical battery module having at least one header connector (25) comprising a header housing (26) in which a header terminal (27) is housed, each header housing (26) having a header cavity (28) within which a connection portion (9) of a respective header terminal (27) protrudes, and comprising positioning each guiding portion (8) opposite a respective header cavity (28),
- a plugging step comprising inserting each guiding portion (8) in a respective header cavity (28), so that the cap locking means (11) of each power connector (3) interacts with respective unlocking means (31) comprised on a header connector (25) ,
- a connecting step comprising pushing on the cap (10) in the mating direction (MD) so that the cap locking means (11) is displaced beyond the unlocking means (31) and so that the cap locking means (11) locks onto header locking means (32) comprised on a header connector (25).

## Patentansprüche

1. Leistungsverbinder (3) zum Verbinden einer Stromschiene (4) mit einem elektrischen Batteriemodul, wobei der Leistungsverbinder (3) Folgendes umfasst: eine elektrisch leitfähige Stromschiene (4) mit einem Stromschienenende (5), ein elektrisch isolierendes Verbindergehäuse (6), das einen mit dem Stromschienenende (5) elektrisch verbundenen Verbinderanschluss (7) aufnimmt, wobei das Verbindergehäuse (6) einen Führungsabschnitt (8) aufweist, in dem ein Verbindungsabschnitt (9) des Verbinderanschlusses (7) untergebracht ist, eine elektrisch isolierende Kappe (10), die das Verbindergehäuse (6) zumindest teilweise verschließt und verhindert, dass der Verbinderanschluss (7) und das Stromschienenende (5) von einem Bedienerfinger berührt werden, **dadurch gekennzeichnet, dass** der Verbinderanschluss (7) und das Stromschienenende (5) mechanisch und starr an der Kappe (10) befestigt sind, dass die Kappe (10), der Verbinderanschluss (7) und das Stromschienenende (5) gemeinsam relativ zum Verbindergehäuse (6) zwischen mindestens einer Lieferposition und einer Verbindungsposition beweglich sind, wobei in der Lieferposition der Verbindungsabschnitt (9) weiter in den Führungsabschnitt (8) zurückgezogen ist als in der Verbindungsposition, und dass die Kappe (10) Kappenverriegelungsmittel (11) umfasst, wobei die Kappenverriegelungsmittel (11) zwischen einer verriegelten Position, in der sie die Kappe (10) und das Verbindergehäuse (6) in der Lieferposition halten, und einer entriegelten Position, in der die Kappe (10) und das Verbindergehäuse (6) freigegeben sind, um zu ermöglichen, dass die Kappe (10) in die Verbindungsposition geschoben wird, betätigbar sind.

2. Leistungsverbinder (3) nach Anspruch 1, wobei das Verbindergehäuse (6) einen Vorsprung (12) aufweist und das Kappenverriegelungsmittel (11) einen an der Kappe (10) angelenkten Hebel (13) aufweist, wobei der Hebel (13) einen ersten Anschlag (14) aufweist, der mit dem Vorsprung (12) in Eingriff steht, um die Kappe (10) und das Verbindergehäuse (6) in der Lieferposition zu halten.

3. Leistungsverbinder (3) nach Anspruch 1 oder 2, wobei der Verbinderanschluss (7) ein Buchsenanschluss ist, der Kontaktlamellen (15) aufweist, die sich im Wesentlichen in Längsrichtung in der Steckrichtung (MD) erstrecken und symmetrisch um eine Symmetrieachse (SA) angeordnet sind, die parallel zur Steckrichtung (MD) ist, wobei jede Kontaktlamelle (15) ein freies Ende (16) aufweist, wobei jedes freie Ende (16) innerhalb des Führungsabschnitts (8) angeordnet ist, und wobei die Kappe (10) einen Finger (17) aufweist, der sich im Wesentlichen parallel zur Symmetrieachse (SA) erstreckt, wobei die Kappe (10) und der Finger (17) einstückig ausgebildet sind, wobei der Finger (17) eine Spitze (18) aufweist, die innerhalb des Führungsabschnitts (8) und weiter in der Steckrichtung (MD) als jedes freie Ende (16) der Kontaktlamelle (15) positioniert ist.

4. Stromschienen-Verbindungsanordnung (2), umfassend einen Leistungsverbinder (3) nach einem der Ansprüche 1 bis 3, umfassend eine Stromschiene (4), zwei Verbindergehäuse (6) und zwei Kappen (10), wobei sich die Stromschiene (4) in einer Längsrichtung (LD) zwischen zwei Stromschienenenden (5) erstreckt, wobei jedes Stromschienenende (5) mechanisch und elektrisch mit einem Verbinderanschluss (7) verbunden ist, der im Führungsabschnitt (8) eines der beiden Verbindergehäuse (6) untergebracht ist.

5. Stromschienen-Verbindungsanordnung (2) nach Anspruch 4, wobei die Stromschiene (4) aus einer Vielzahl von leitfähigen Schichten hergestellt ist.

6. Stromschienen-Verbindungsanordnung (2) nach Anspruch 4 oder 5, wobei die Stromschiene (4) einen V-förmigen Abschnitt (19) aufweist, der es den beiden Stromschienenenden (5) ermöglicht, relativ zueinander zumindest in der Längsrichtung (LD) der Stromschiene (4) verschoben zu werden.

7. Stromschienen-Verbindungsanordnung (2) nach Anspruch 6, wobei der V-förmige Abschnitt (19) zwei am Scheitelpunkt (21) des V-förmigen Abschnitts (19) verbundene Schenkel (20) aufweist, wobei der Winkel (α) zwischen diesen Schenkeln (20) gleich oder kleiner als 30 Grad ist.

8. Stromschienen-Verbindungsanordnung (2) nach Anspruch 6 oder 7, wobei der V-förmige Abschnitt (19) in einer Abdeckung (22) untergebracht ist, wobei die Abdeckung (22) einen Zahn bildet, der sich von einer Basis (23) zu einer Spitze (24) im Wesentlichen in der Steckrichtung (MD) erstreckt.

9. Batterieverbindungsanordnung (1), umfassend den Leistungsverbinder (3) nach einem der Ansprüche 1 bis 3, einen Stiftleistenverbinder (25), wobei der Leistungsverbinder (3) so konfiguriert ist, dass er in einer Steckrichtung (MD) mit dem Stiftleistenverbinder (25) zusammenpasst, wobei der Stiftleistenverbinder (25) an einem elektrischen Batteriemodul montiert istund umfassend ein Stiftleistengehäuse (26), in dem ein Stiftleistenanschluss (27) untergebracht ist, wobei das Stiftleistengehäuse (26) eine Stiftleistenkavität (28) aufweist, in die ein Verbindungsabschnitt (29) des Stiftleistenanschlusses (27) hineinragt, wobei der Stiftleistenanschluss (27) so konfiguriert ist, dass er mit dem Verbinderanschluss (7) zusammengepasst wird, wobei der Führungsabschnitt (8) so konfiguriert ist, dass er in einer Endposition in die Stiftleistenkavität (28) eingeführt wird, und das Kappenverriegelungsmittel (11) so konfiguriert ist, dass es durch den Stiftleistenverbinder (25) entriegelt wird, wenn der Führungsabschnitt (8) in die Stiftleistenkavität (28) in Richtung der Endposition eingeführt wird, um das Verbindergehäuse (6) und die Verbinderkappe (10) aus der Lieferposition zu lösen und so zu ermöglichen, dass die Kappe (10) in der Steckrichtung (MD) bis in die Verbindungsposition geschoben wird.

10. Batterieverbindungsanordnung (1) nach Anspruch 9, wobei die Kappe (10) einen Finger (17) aufweist, der sich im Wesentlichen parallel zur Steckrichtung (MD) erstreckt, und der Stiftleistenanschluss eine Aussparung aufweist, die sich in Längsrichtung parallel zur Steckrichtung (MD) erstreckt und so konfiguriert ist, dass sie mindestens einen Teil des Fingers (17) aufnimmt.

11. Batterieverbindungsanordnung (1) nach Anspruch 9 oder 10, wobei der Stiftleistenanschluss (27) ein Stiftanschluss ist und der Verbinderanschluss (7) ein Buchsenanschluss ist, wobei der Stiftleistenanschluss (27) ein isolierendes Endstück (30) aufweist und der Verbinderanschluss (7) Kontaktlamellen (15) aufweist, die sich im Wesentlichen in Längsrichtung in der Steckrichtung (MD) erstrecken und symmetrisch um eine Symmetrieachse (SA) angeordnet sind, die parallel zur Steckrichtung (MD) ist, wobei jede Kontaktlamelle (15) ein freies Ende (16) aufweist, und wobei mindestens ein freies Ende (16) der Kontaktlamelle (15) auf dem isolierenden Endstück (30) in einer Konfiguration ruht, in der der Leistungsverbinder (3) und der Stiftleistenverbinder (25) sich in einer Zwischenposition befinden, in der der Führungsabschnitt (8) in die Stiftleistenkavität (28) eingeführt ist und das Kappenverriegelungsmittel (11) sich noch in der verriegelten Position befindet.

12. Ein Verfahren zum Verbinden von zwei elektrischen Batteriemodulen eines Elektro- oder Hybridfahrzeugs, wobei das Verfahren Folgendes umfasst:
• einen Vorpositionierungsschritt, der das Bereitstellen von zwei elektrischen Batteriemodulen und einer Stromschienen-Verbindungsanordnung (2) nach einem der Ansprüche 4 bis 8 umfasst, wobei jedes elektrische Batteriemodul mindestens einen Stiftleistenverbinder (25) aufweist, der ein Stiftleistengehäuse (26) umfasst, in dem ein Stiftleistenanschluss (27) untergebracht ist, wobei jedes Stiftleistengehäuse (26) eine Stiftleistenkavität (28) aufweist, in die ein Verbindungsabschnitt (9) eines jeweiligen Stiftleistenanschlusses (27) hineinragt, und das Positionieren jedes Führungsabschnitts (8) gegenüber einer jeweiligen Stiftleistenkavität (28),
• einen Einsteckschritt, der das Einführen jedes Führungsabschnitts (8) in eine jeweilige Stiftleistenkavität (28) umfasst, so dass das Kappenverriegelungsmittel (11) jedes Leistungsverbinders (3) mit jeweiligen Entriegelungsmitteln (31) interagiert, die an einem Stiftleistenverbinder (25) vorgesehen sind,
• einen Verbindungsschritt, der das Drücken auf die Kappe (10) in der Steckrichtung (MD) umfasst, so dass das Kappenverriegelungsmittel (11) über das Entriegelungsmittel (31) hinaus verschoben wird und so dass das Kappenverriegelungsmittel (11) an Stiftleistenverriegelungsmitteln (32) einrastet, die an einem Stiftleistenverbinder (25) vorgesehen sind.

## Revendications

1. Connecteur de puissance (3) pour connecter une barre omnibus (4) à un module de batterie électrique, le connecteur de puissance (3) comprenant, une barre omnibus électriquement conductrice (4) ayant une extrémité de barre omnibus (5), un boîtier de connecteur électriquement isolant (6) logeant une borne de connecteur (7) connectée électriquement à l'extrémité de barre omnibus (5), le boîtier de connecteur (6) ayant une portion de guidage (8) dans laquelle une portion de connexion (9) de la borne de connecteur (7) est logée, un capuchon électriquement isolant (10) fermant au moins partiellement le boîtier de connecteur (6) et empêchant la borne de connecteur (7) et l'extrémité de barre omnibus (5) d'être touchées par le doigt d'un opérateur, **caractérisé en ce que** la borne de connecteur (7) et l'extrémité de barre omnibus (5) sont fixées mécaniquement et de manière rigide dans le capuchon (10), **en ce que** le capuchon (10), la borne de connecteur (7) et l'extrémité de barre omnibus (5) sont mobiles ensemble par rapport au boîtier de connecteur (6) entre au moins une position de livraison et une position de connexion, dans la position de livraison la portion de connexion (9) étant rétractée plus loin dans la portion de guidage (8) que dans la position de connexion, et **en ce que** le capuchon (10) comprend un moyen de verrouillage de capuchon (11), le moyen de verrouillage de capuchon (11) étant actionnable entre une position verrouillée dans laquelle il maintient le capuchon (10) et le boîtier de connecteur (6) dans la position de livraison et une position déverrouillée dans laquelle le capuchon (10) et le boîtier de connecteur (6) sont libérés de manière à permettre au capuchon (10) d'être poussé dans la position de connexion.

2. Connecteur de puissance (3) selon la revendication 1, dans lequel le boîtier de connecteur (6) comprend une protubérance (12) et le moyen de verrouillage de capuchon (11) comprend un levier (13) articulé sur le capuchon (10), le levier (13) comprenant une première butée (14) s'engageant avec la protubérance (12), pour maintenir le capuchon (10) et le boîtier de connecteur (6) dans la position de livraison.

3. Connecteur de puissance (3) selon la revendication 1 ou 2, dans lequel la borne de connecteur (7) est une borne femelle ayant des lames de contact (15) s'étendant longitudinalement essentiellement dans la direction d'accouplement (MD) et agencées symétriquement autour d'un axe de symétrie (SA) qui est parallèle à la direction d'accouplement (MD), chaque lame de contact (15) ayant une extrémité libre (16), chaque extrémité libre (16) étant située à l'intérieur de la portion de guidage (8), et dans lequel le capuchon (10) comprend un doigt (17) s'étendant essentiellement parallèlement à l'axe de symétrie (SA), le capuchon (10) et le doigt (17) étant solidaires, le doigt (17) ayant une pointe (18) positionnée à l'intérieur de la portion de guidage (8) et plus loin dans la direction d'accouplement (MD) que chaque extrémité libre (16) de lame de contact (15).

4. Ensemble de connexion de barre omnibus (2) comprenant un connecteur de puissance (3) selon l'une quelconque des revendications 1 à 3, comprenant une barre omnibus (4), deux boîtiers de connecteur (6) et deux capuchons (10), dans lequel la barre omnibus (4) s'étend dans une direction longitudinale (LD) entre deux extrémités de barre omnibus (5), chaque extrémité de barre omnibus (5) étant connectée mécaniquement et électriquement à une borne de connecteur (7) logée dans la portion de guidage (8) de l'un des deux boîtiers de connecteur (6).

5. Ensemble de connexion de barre omnibus (2) selon la revendication 4, dans lequel la barre omnibus (4) est constituée d'une pluralité de couches conductrices.

6. Ensemble de connexion de barre omnibus (2) selon la revendication 4 ou 5, dans lequel la barre omnibus (4) a une portion en forme de V (19) permettant aux deux extrémités de barre omnibus (5) d'être déplacées l'une par rapport à l'autre au moins dans la direction longitudinale (LD) de la barre omnibus (4).

7. Ensemble de connexion de barre omnibus (2) selon la revendication 6, dans lequel la portion en forme de V (19) comprend deux branches (20) reliées au sommet (21) de la portion en forme de V (19), l'angle (α) entre ces branches (20) étant égal ou inférieur à 30 degrés.

8. Ensemble de connexion de barre omnibus (2) selon la revendication 6 ou 7, dans lequel la portion en forme de V (19) est logée dans un couvercle (22), le couvercle (22) formant une dent s'étendant depuis une base (23) jusqu'à un sommet (24), essentiellement dans la direction d'accouplement (MD).

9. Ensemble de connexion de batterie (1) comprenant le connecteur de puissance (3) selon l'une quelconque des revendications 1 à 3, un connecteur d'embase (25), le connecteur de puissance (3) étant configuré pour s'accoupler avec le connecteur d'embase (25) dans une direction d'accouplement (MD), le connecteur d'embase (25) étant monté sur un module de batterie électrique et comprenant un boîtier d'embase (26) dans lequel une borne d'embase (27) est logée, le boîtier d'embase (26) ayant une cavité d'embase (28) à l'intérieur de laquelle une portion de connexion (29) de la borne d'embase (27) fait saillie, la borne d'embase (27) étant configurée pour être accouplée avec la borne de connecteur (7), dans lequel la portion de guidage (8) est configurée pour être insérée dans la cavité d'embase (28) dans une position finale, et le moyen de verrouillage de capuchon (11) est configuré pour être déverrouillé par le connecteur d'embase (25) lorsque la portion de guidage (8) est insérée dans la cavité d'embase (28) vers la position finale, de manière à libérer le boîtier de connecteur (6) et le capuchon de connecteur (10) de la position de livraison et de manière à permettre au capuchon (10) d'être poussé dans la direction d'accouplement (MD) jusqu'à la position de connexion.

10. Ensemble de connexion de batterie (1) selon la revendication 9, dans lequel le capuchon (10) comprend un doigt (17) s'étendant essentiellement parallèlement à la direction d'accouplement (MD) et la borne d'embase a un évidement s'étendant longitudinalement parallèlement à la direction d'accouplement (MD) et configuré pour recevoir au moins une portion du doigt (17).

11. Ensemble de connexion de batterie (1) selon la revendication 9 ou 10, dans lequel la borne d'embase (27) est une borne mâle et la borne de connecteur (7) est une borne femelle, dans lequel la borne d'embase (27) comprend une pièce d'extrémité isolante (30) et la borne de connecteur (7) comprend des lames de contact (15) s'étendant longitudinalement essentiellement dans la direction d'accouplement (MD) et agencées symétriquement autour d'un axe de symétrie (SA) qui est parallèle à la direction d'accouplement (MD), chaque lame de contact (15) ayant une extrémité libre (16), et dans lequel au moins une extrémité libre (16) de lame de contact (15) repose sur la pièce d'extrémité isolante (30) dans une configuration dans laquelle le connecteur de puissance (3) et le connecteur d'embase (25) sont dans une position intermédiaire dans laquelle la portion de guidage (8) est insérée dans la cavité d'embase (28) et le moyen de verrouillage de capuchon (11) est encore dans la position verrouillée.

12. Procédé de connexion de deux modules de batterie électrique de véhicule électrique ou hybride, le procédé comprenant
• une étape de pré-positionnement comprenant la fourniture de deux modules de batterie électrique et d'un ensemble de connexion de barre omnibus (2) selon l'une quelconque des revendications 4 à 8, chaque module de batterie électrique ayant au moins un connecteur d'embase (25) comprenant un boîtier d'embase (26) dans lequel une borne d'embase (27) est logée, chaque boîtier d'embase (26) ayant une cavité d'embase (28) à l'intérieur de laquelle une portion de connexion (9) d'une borne d'embase (27) respective fait saillie, et comprenant le positionnement de chaque portion de guidage (8) à l'opposé d'une cavité d'embase (28) respective,
• une étape d'enfichage comprenant l'insertion de chaque portion de guidage (8) dans une cavité d'embase (28) respective, de sorte que le moyen de verrouillage de capuchon (11) de chaque connecteur de puissance (3) interagit avec un moyen de déverrouillage (31) respectif compris sur un connecteur d'embase (25),
• une étape de connexion comprenant la poussée sur le capuchon (10) dans la direction d'accouplement (MD) de sorte que le moyen de verrouillage de capuchon (11) est déplacé au-delà du moyen de déverrouillage (31) et de sorte que le moyen de verrouillage de capuchon (11) se verrouille sur un moyen de verrouillage d'embase (32) compris sur un connecteur d'embase (25).
